# EUROPÄISCHE PATENTANMELDUNG

(11) **EP 3 238 822 A1**
(43) Veröffentlichungstag der Anmeldung: **01.11.2017**
(21) Anmeldenummer: 16167226.6
(22) Anmeldetag: 27.04.2016
(51) Int. Cl.: B01L 9/00, B01L 9/06, B01L 99/00, G01N 35/04

(54) **AUFNAHME FÜR EIN ODER MEHRERE PROBENBEHÄLTNISSE**

(71) Anmelder: Baxalta Incorporated, Bannockburn, IL 60015 (US); Baxalta GmbH, 8152 Glattpark, Opfikon (CH)
(72) Erfinder: Prodinger, Gabriela, 1220 Wien (AT); Pilliater, Martin, 1220 Wien (AT)
(74) Vertreter: Hoffmann Eitle

(57) **Zusammenfassung**

Die Erfindung betrifft eine Aufnahme, insbesondere Reinigungsvorrichtung, zum Aufnehmen von zumindest einem bevorzugt länglichen Probenbehältnis, insbesondere Küvette, das eine Öffnung und einen der Öffnung in einer Längsrichtung gegenüberliegenden, das Probenbehältnis verschließenden Boden aufweist, zur Reinigung eines derartigen Probenbehältnisses vorgesehen, wobei die Aufnahme ein erstes Element zum zumindest abschnittsweisen Anliegen in der Längsrichtung an einem in die Längsrichtung zeigenden Rand der Öffnung des Probenbehältnisses, wobei das erste Element einen Durchgang aufweist, der derart ausgebildet ist, dass er zumindest abschnittsweise mit der Öffnung des Probenbehältnisses bei Aufnahme des Probenbehältnisses überlappt, und ausgebildet ist, bei Aufnahme des Probenbehältnisses Fluid zum Reinigen des Probenbehältnisses durch die Öffnung ein- und auszuführen, und ein dem ersten Element in Längsrichtung im Wesentlichen gegenüberliegendes zweites Element zum zumindest abschnittsweisen Anliegen in der Längsrichtung an dem Boden des Probenbehältnisses aufweist, wobei das erste und zweite Element derart angeordnet sind, dass das Probenbehältnis zwischen dem ersten und zweiten Element gehalten, insbesondere zwischen dem ersten und zweiten Element in der Längsrichtung eingeklemmt, werden kann.

## Beschreibung

### Technisches Gebiet

Die Erfindung betrifft eine Aufnahme für Probenbehältnisse, insbesondere längliche Probenbehältnisse wie Küvetten oder Reagenzgläser. Derartige Aufnahmen können insbesondere beim Reinigen von Probenbehältnissen eingesetzt werden.

### Stand der Technik

Probenbehältnisse wie Küvetten oder Reagenzgläser sind üblicherweise aus Quarzglas oder Glas hergestellt und relativ teuer. Sie werden wiederverwendet und müssen vor erneuter Verwendung sauber und rückstandsfrei gereinigt werden. Oftmals werden sie dabei auch mit Druckluft trocken geblasen.

Bei dem Reinigungs- und Trockenvorgang werden die Probenbehältnisse herkömmlicherweise einzeln in der Hand gehalten, wobei Handschuhe getragen werden müssen und ein hohes Risiko besteht, dass ein Probenbehältnis während des manuellen Reinigens zerbricht. Bei ausreichender Geschicklichkeit können mit einer Hand beispielsweise bestenfalls zwei Küvetten gleichzeitig gehalten werden. Somit ist das manuelle Reinigen äußerst zeitaufwändig.

Kommerziell erhältliche Reinigungsgeräte wie etwa das "Vakuwash"-Gerät von Bel-Art-Products oder die "P 65"-Geräteserie von Firefly Science saugen durch das Anlegen eines Unterdrucks eine Reinigungsflüssigkeit aus einem Vorratsbehälter an, die durch eine Düse in den Innenraum des Probenbehältnisses spritzt. Zusätzlich kann die Außenwand des Probenbehältnisses mit der Reinigungsflüssigkeit aus einer Spritzflasche u. dgl. abgewaschen werden. Die verbrauchte Reinigungsflüssigkeit wird in einem Erlenmeyer-Kolben gesammelt. Solche Reinigungsgeräte vermögen maximal zwei Küvetten aufzunehmen und erfordern eine Vakuumpumpe. Bei der Reinigung von Rückständen ungefährlicher Probenlösungen, wie sie z. B. in der Lebensmittel- und der Biochemie anfallen, bieten diese Reinigungsgeräte keine zufriedenstellende Zeitersparnis und keinen ausreichenden Sicherheitsgewinn gegenüber dem manuellen Auswaschen.

### Darstellung der Erfindung

Es ist daher Aufgabe der vorliegenden Erfindung, bei einfacher Konstruktion eine Aufnahme für Probenbehältnisse zu schaffen, die insbesondere bei der Reinigung der Probenbehältnisse zum Einsatz kommen kann, wobei die Probenbehältnisse in die Aufnahme leicht aufzunehmen sind, sicher und zuverlässig aufgenommen bleiben und leicht entnommen werden können. Dabei soll die Aufnahme vorzugsweise derart ausgebildet sein, dass aufgenommene Probenbehältnisse zuverlässig und sauber gereinigt werden können. Vorzugsweise sollen auch mehrere Probenbehältnisse aufgenommen werden können, um die Reinigung gleichzeitig durchführen zu können.

Diese Aufgabe wird erfindungsgemäß durch die Aufnahme gemäß Anspruch 1 gelöst.

Demnach ist eine Aufnahme, insbesondere Reinigungsvorrichtung, zum Aufnehmen von zumindest einem bevorzugt länglichen Probenbehältnis, insbesondere Küvette, das eine Öffnung und einen der Öffnung in einer Längsrichtung gegenüberliegenden, das Probenbehältnis verschließenden Boden aufweist, zur Reinigung eines derartigen Probenbehältnisses vorgesehen, wobei die Aufnahme ein erstes Element zum zumindest abschnittsweisen Anliegen in der Längsrichtung an einem in die Längsrichtung zeigenden Rand der Öffnung des Probenbehältnisses, wobei das erste Element einen Durchgang aufweist, der derart ausgebildet ist, dass er zumindest abschnittsweise mit der Öffnung des Probenbehältnisses bei Aufnahme des Probenbehältnisses überlappt, und ausgebildet ist, bei Aufnahme des Probenbehältnisses Fluid zum Reinigen des Probenbehältnisses durch die Öffnung ein- und auszuführen, und ein dem ersten Element in Längsrichtung im Wesentlichen gegenüberliegendes zweites Element zum zumindest abschnittsweisen Anliegen in der Längsrichtung an dem Boden des Probenbehältnisses aufweist, wobei das erste und zweite Element derart angeordnet sind, dass das Probenbehältnis zwischen dem ersten und zweiten Element gehalten, insbesondere zwischen dem ersten und zweiten Element in der Längsrichtung eingeklemmt, werden kann.

Der Erfindung liegt der Gedanke zugrunde, ein oder mehrere Probenbehältnisse in Längsrichtung zwischen einem ersten und zweiten Element dadurch fest zu halten, dass das erste und zweite Element an gegenüberliegenden Seiten an dem Probenbehältnis anliegen. Das erste Element liegt an der Öffnung des Probenbehältnisses derart an, dass der Rand der Öffnung von der Längsrichtung her mit dem ersten Element in Kontakt ist. Auf der gegenüberliegenden Seite der Öffnung liegt der Boden an dem zweiten Element an. Das Probenbehältnis wird so zwischen dem ersten und zweiten Element in Längsrichtung insbesondere formschlüssig gehalten, und ist vorzugsweise zwischen ersten und zweiten Element in Längsrichtung eingeklemmt ist.

In dem Bereich der Öffnung des Probenbehältnisses weist das erste Element eine derartige Ausgestaltung auf, dass in das Probenbehältnis beim Anliegen an dem ersten Element Fluid zum Reinigen, beispielsweise Reinigungsflüssigkeit und Druckluft, durch die Öffnung und den Durchgang eingeführt und wieder ausgeführt werden kann. Mit anderen Worten ermöglicht der Durchgang in dem ersten Element, dass über die Öffnung des Probenbehältnisses während der Aufnahme des Probenbehältnisses Reinigungsfluid in das Probenbehältnis eingespritzt werden, gegen den Boden des Probenbehältnisses prallen und wieder durch die Öffnung und den Durchgang heraustreten kann. Reinigungsfluid kann also über die Öffnung des Probenbehältnisses und den Durchgang im ersten Element sowohl ein- als auch austreten, insbesondere gleichzeitig.

Somit kann die Reinigung ausreichend genau und rückstandsfrei erfolgen, während das Probenbehältnis sicher und fest in der Aufnahme aufgenommen ist. Dadurch kann beispielsweise mit erhöhtem Druck Reinigungsflüssigkeit oder Druckluft eingebracht werden, ohne dass die Handhabung des Probenbehältnisses bzw. der mehreren Probenbehältnisse problematisch ist. Somit kann mit der vorliegenden Erfindung eine sichere Aufnahme von Probenbehältnissen erreicht werden, und bei Verwendung der Aufnahme beim Reinigen wird eine gründliche und zuverlässige Reinigung für eine rückstandsfreie Wiederverwendung der Probenbehältnisse ermöglicht.

Die vorliegende Erfindung eignet sich für verschiedenste Küvetten bzw. Reagenzgläser bzw. im Allgemeinen für insbesondere länglich ausgebildete Probenbehältnisse mit einer Öffnung und einem gegenüberliegenden Boden. Die vorliegende Erfindung ist insbesondere für Küvetten mit Stopfenverschluss oder Schraubverschluss geeignet. Die Grundfläche der Küvetten im Querschnitt senkrecht zur Längsrichtung der Küvetten kann insbesondere quadratisch sein.

Auch die Verwendung der erfindungsgemäßen Aufnahme zum Reinigen von Probenbehältnissen ist angedacht. Eine Reinigungsvorrichtung kann die erfindungsgemäße Aufnahme aufweisen. Sie kann insbesondere eine Einheit zur Abgabe von Reinigungsflüssigkeit und/oder eine Einheit zum Beaufschlagen mit Druckluft aufweisen.

Weitere besonders vorteilhafte Weiterbildungen der Erfindung sind in den abhängigen Ansprüchen angegeben.

In einer bevorzugten Ausführungsform weist das erste Element am Durchgang zumindest abschnittsweise eine Vertiefung in der Längsrichtung auf, wobei die Vertiefung eine größere Weite als eine Weite des Durchgangs in einer Richtung senkrecht zur Längsrichtung aufweist. Die Weite der Vertiefung ist dabei so bemessen, dass ein Abschnitt des Probenbehältnisses im Wesentlichen um die Öffnung des Probenbehältnisses herum in der Vertiefung in Längsrichtung aufgenommen werden kann. Vorzugsweise sind die Vertiefung und der Durchgang als eine Abstufung ausgebildet, wobei das Probenbehältnis in einer seitlichen Richtung senkrecht zur Längsrichtung an der Vertiefung anliegt und der Rand der Öffnung in der Längsrichtung an die Vertiefung anstößt. Diese Gestaltung ermöglicht, dass das Probenbehältnis noch präziser und zuverlässiger in der Aufnahme aufgenommen sein kann, da insbesondere ein Verrutschen des Probenbehältnisses in eine Richtung senkrecht zur Längsrichtung durch die Aufnahme in der Vertiefung verhindert werden kann.

In einer bevorzugten Ausführungsform ist das erste Element im Wesentlichen als Platte ausgebildet und weist eine Aussparung bzw. Bohrung auf, die den Durchgang ausbildet. Die Aussparung kann beispielsweise in Form einer kreisförmigen oder ovalen Ausfräsung realisiert sein.

In einer alternativen Ausführungsform kann das erste Element zumindest zwei im Wesentlichen parallel zueinander und in einer Richtung senkrecht zur Längsrichtung verlaufende Schienen aufweisen, so dass der Durchgang als Zwischenraum zwischen den Schienen ausgebildet ist.

Der Abstand der Schienen zueinander ist insbesondere geringer als ein Außendurchmesser des Probenbehältnisses entlang der Richtung des Abstands der Schienen, damit das Probenbehältnis in Längsrichtung an den Schienen anliegen kann.

Insbesondere bei der Ausführungsform mit den Schienen eignet sich die erfindungsgemäße Aufnahme zum gleichzeitigen Aufnehmen mehrerer Probenbehältnisse entlang der Richtung, in die sich die Schienen erstrecken.

Vorzugsweise weist das erste und/oder zweite Element eine Federeinrichtung auf, durch die das Probenbehältnis gegen das entsprechende andere zweite bzw. erste Element dadurch gedrückt wird, dass die Federeinrichtung eine in Längsrichtung wirkende Rückstellkraft ausübt. Vorzugsweise ist die Federeinrichtung dabei derart ausgebildet, dass bei Vorspannen der Federeinrichtung in die Längsrichtung der Abstand zwischen dem ersten und zweiten Element zum Einsetzen des Probenbehältnisses vergrößert wird. Durch die Federeinrichtung wird zum einen das Einsetzen bzw. Herausnehmen des Probenbehältnisses vereinfacht, zum anderen kann das Probenbehältnis auch zuverlässiger in der Aufnahme gehalten werden, indem die zumindest leicht vorgespannte Feder das Probenbehältnis zwischen dem ersten und zweiten Element einspannt bzw. einklemmt.

Die Federeinrichtung kann ein Federelement aufweisen, das derart angeordnet ist, dass es bei Aufnahme des Probenbehältnisses zu der zu dem Probenbehältnis hin orientierten Seite des ersten bzw. zweiten Elements angeordnet ist. Alternativ oder zusätzlich kann ein Federelement derart angeordnet sein, dass es bei Aufnahme des Probenbehältnisses auf der von dem Probenbehältnis weg orientierten Seite des ersten bzw. zweiten Elements angeordnet ist.

Darüber hinaus kann die Federeinrichtung einen in Längsrichtung beweglichen Stempel aufweisen, der zumindest abschnittsweise an dem Probenbehältnis anliegt. Das Federelement, beispielsweise eine Spiralfeder, kann um den Stempel herum angeordnet sein.

Bevorzugt weist das zweite Element die Federeinrichtung, insbesondere mit dem Stempel, auf, sodass der Boden des Probenbehältnisses an dem Stempel anliegen kann.

Bevorzugterweise kann die Aufnahme mehrere Probenbehältnisse aufnehmen. Beispielsweise können die Probenbehältnisse in einer Reihe in einer Richtung senkrecht zur Längsrichtung angeordnet sein. Auch mehrreihige Anordnungen sind denkbar.

Eine mehrreihige Anordnung hat den zusätzlichen Vorteil, dass die Aufnahme eine verbesserte Standsicherheit gegenüber einer relativ schmal konstruierten Aufnahme mit einer einreihigen Aufnahme der Probenbehältnisse aufweist. Die Standfestigkeit kann durch Ausleger verbessert sein.

Darüber hinaus ist denkbar, dass die Aufnahme Füße aufweist, die ein Aufstellen der Aufnahme ohne Berühren der Auflagefläche, auf der die Aufnahme angeordnet ist, also insbesondere des Labortisches, ermöglichen.

Die Aufnahme kann schwenkbar sein, sodass das aufgenommene Probenbehältnis in der Aufnahme geneigt werden kann. Dies ist vorteilhaft, da durch das Neigen bzw. Kippen der Aufnahme restliche Reinigungsflüssigkeit aus dem Probenbehältnis herauslaufen kann.

Die Komponenten der erfindungsgemäßen Aufnahme müssen, wenn sie zur Reinigung verwendet wird, gegen Reinigungsflüssigkeiten beständig sein. Zu den im abschließenden Reinigungsschritt zur Entfernung des Wassers gebräuchlichen Reinigungsflüssigkeiten zählen insbesondere Ethanol und Isopropanol, da diese durch Druckluft gleichmäßig und rückstandsfrei weggeblasen werden können. In der bevorzugten Ausführung werden gegen diese Reinigungsflüssigkeiten beständige Materialien wie Kunststoffe verwendet. Das erste und zweite Element sind daher vorzugsweise aus Polyethylen oder Polypropylen hergestellt. Weiter bevorzugt werden Fluorpolymer-Kunststoffe wie Polytetrafluorethylen oder dessen Copolymerisate. Für den Stempel ist insbesondere die Verwendung von Silikonkautschuk oder Fluorelastomer vorteilhaft.

Weitere Merkmale und Vorteile der Erfindung werden anhand der nachfolgenden ausführlichen Beschreibung noch näher ersichtlich werden.

### Kurze Beschreibung der Zeichnungen

- Fig. 1a und 1b: zeigen eine erste Ausführungsform der vorliegenden Erfindung in einer Frontal- und einer Seitenansicht;
- Fig. 2a und 2b: zeigen eine eine zweite Ausführungsform der vorliegenden Erfindung in einer Frontal- und einer Seitenansicht;
- Fig. 3: zeigt eine Draufsicht auf das erste Element der ersten Ausführungsform; und
- Fig. 4: zeigt eine Draufsicht auf das erste Element der zweiten Ausführungsform.

Ausführliche Beschreibung bevorzugter Ausführungsformen

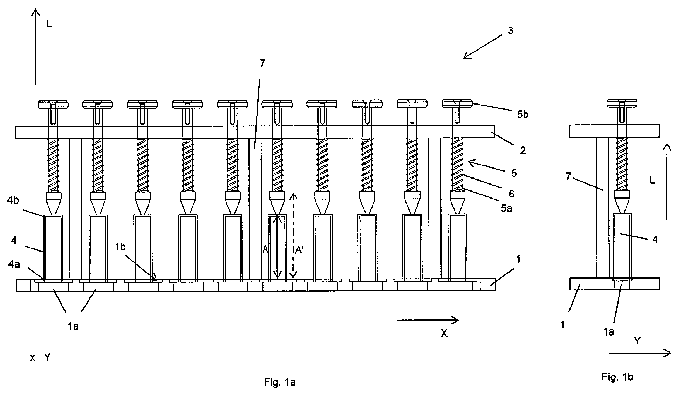

Bevorzugte Ausführungsformen der vorliegenden Erfindung werden nachfolgend ausführlich unter Bezugnahme auf die begleitenden Figuren 1 bis 4 beschrieben.

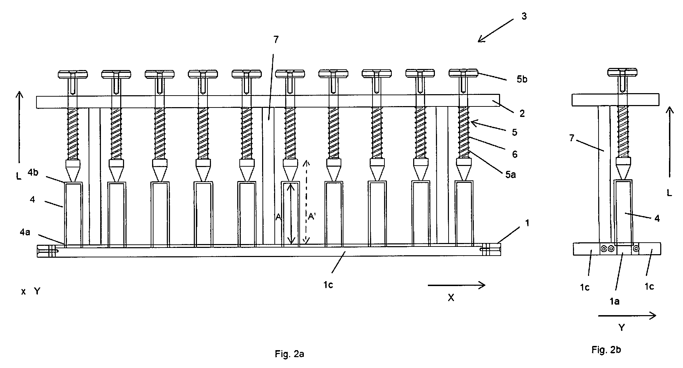

In Fig. 1a und 2a verlaufen die Längsrichtung L und die dazu senkrechte X-Richtung in der Zeichenebene, und die Y-Richtung verläuft in die Zeichenebene hinein.

In Fig. 1b und 2b verlaufen die Längsrichtung L und die dazu senkrechte Y-Richtung in der Zeichenebene, und die X-Richtung verläuft in die Zeichenebene hinein.

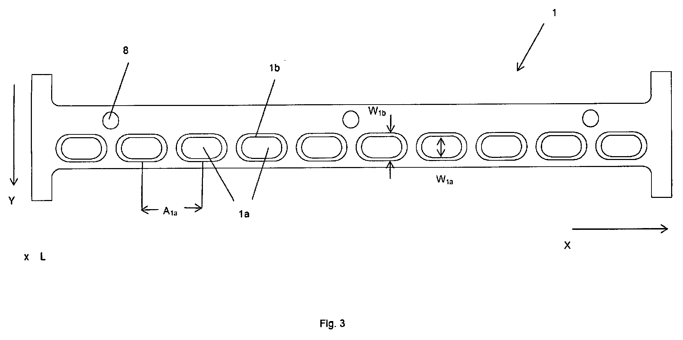

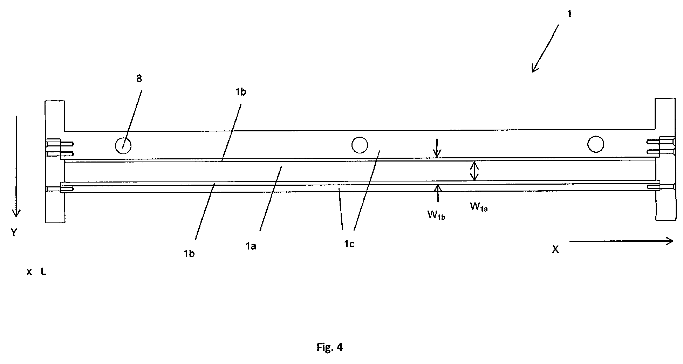

In Fig. 3 und 4 verlaufen die Y- und X-Richtung in der Zeichenebene, und die Längsrichtung L verläuft senkrecht zur Zeichenebene.

Fig. 1a und 2a zeigen die erfindungsgemäße Aufnahme 3 in einer Frontalansicht. In der Aufnahme 3 werden längliche Probenbehältnisse 4, insbesondere Küvetten, die eine Öffnung 4a an einem Ende und einen Boden 4b an dem gegenüberliegenden Ende aufweisen, aufgenommen. Das Probenbehältnis 4 ist insbesondere in der Längsrichtung L länglich ausgebildet.

Die Aufnahme 3 weist ein erstes Element 1 auf, das in der in Fig. 1a gezeigten ersten Ausführungsform im Wesentlichen plattenförmig ausgestaltet ist, und Durchgänge 1a sind als Aussparungen in dem ersten Element 1 ausgebildet. Das zweite Element 2 kann ebenso eine Platte aufweisen, und liegt dem ersten Element 1 im Wesentlichen in Längsrichtung gegenüber.

Das zweite Element 2 weist eine Federeinrichtung 5 auf, die mehrere Stempel 5a aufweist, die jeweils an dem Boden 4b eines Probenbehältnisses 4 in Längsrichtung L anliegen können. Der Stempel 5a ist in Längsrichtung L beweglich und kann in der in Fig. 1a gezeigten Ausführungsform durch die Platte des zweiten Elements 2 in Längsrichtung L hindurchbewegt werden, indem an dem Griff 5b in Längsrichtung L gezogen wird.

Das erste 1 und das zweite 2 Element sind durch sich in Längsrichtung L erstreckende Verbindungselemente 7 verbunden.

Ein Federelement 6 ist um den Stempel 5 herum vorgesehen, und zwar derart, dass das Federelement 6, insbesondere eine Spiralfeder, beim Bewegen des Griffs 5b aus der Aufnahme 3 heraus in die Längsrichtung L vorgespannt wird. Beim Herausziehen des Griffs 5b wird der Stempel 5a derart weg von der Platte des ersten Elements 1 bewegt, dass der Abstand A, der zwischen der Platte des ersten Elements 1 und dem Stempel 5a in Längsrichtung L bei Aufnahme des Federelements 6 vorliegt, beispielsweise auf den Abstand A' vergrößert wird.

Das Federelement 6 ist bei Aufnahme eines Probenbehältnisses 4, also bei dem Abstand A, zumindest leicht vorgespannt. In dem herausgezogenen Zustand des Stempels 5a bei dem Abstand A' kann das Probenbehältnis 4 leicht eingesetzt bzw. herausgenommen werden.

Aus Fig. 3 ist ersichtlich, dass der Durchgang 1a als Aussparung in der Platte des ersten Elements 1 ausgebildet ist. Der Durchgang 1a kann kreisförmig oder oval sein, kann aber auch eine andere Form haben. Der Durchgang 1a ist in der Ausführungsform der Fig. 1 und 3 auf der Seite zu dem Probenbehältnis 4 hin zumindest abschnittsweise von einer Vertiefung 1b umgeben. Die Vertiefung 1b stellt zusammen mit der Oberfläche der Platte des ersten Elements 1 zu der Seite des Probenbehältnisses 4 hin und dem Durchgang 1a eine Stufe dar, an der das Probenbehältnis im Bereich der Öffnung 4a anliegen kann. Die Weite W₁ₐ des Durchgangs 1a ist, beispielsweise in Y-Richtung, kleiner als die Weite W_{1b} der Vertiefung 1b in Y-Richtung. Die Weite W_{1b} ist an die jeweils aufzunehmenden Probenbehältnisse, genauer gesagt den Außendurchmesser der Probenbehältnisse, anzupassen.

Der Abstand der mehreren Durchgänge 1a in X-Richtung beträgt A₁ₐ. Der Abstand A₁ₐ ist so einzustellen, dass eine gute Handhabung gewährleistet ist und gleichzeitig möglichst viele Probenbehältnisse gleichzeitig in der Aufnahme Platz finden.

Die Platte des ersten Elements 1 weist Verbindungspunkte 8, insbesondere Bohrungen, für die Verbindungselemente 7 auf.

In der in den Figuren 2 und 4 gezeigte zweite Ausführungsform weist die Aufnahme, vorzugsweise anstelle der Aussparungen 1a und der Platte des ersten Elements 1, zwei im Wesentlichen parallel zueinander und in X- Richtung verlaufende Schienen 1c auf. Der Zwischenraum zwischen den Schienen, d.h. der Abstand bzw. die Weite W₁ₐ zwischen den Schienen, bildet den Durchgang 1a aus. Die Schienen 1c können an den Seiten, an denen sie (in Y-Richtung) zueinander zeigen, eine Vertiefung 1b aufweisen, die in einem Querschnitt der Schiene 1c entlang der Y-Richtung als Stufe ausgebildet ist. Im Übrigen entspricht die zweite Ausführungsform (bzw. die Figuren 2a, 2b und 4) der ersten Ausführungsform (bzw. den Figuren 1a, 1b und 3), was durch die Verwendung derselben Bezugszeichen verdeutlicht wird.

Erfindungsgemäß kann Reinigungsflüssigkeit durch den Durchgang 1a hindurch in das Probenbehältnis 4 eingebracht werden, während das Probenbehältnis 4 in der Aufnahme 3 aufgenommen ist. Die in den Figuren angedeutete Küvette 4 hat eine quadratische Grundform und weist eine schlitzförmige Öffnung 4a auf. Diese Öffnung 4a überlappt mit dem Durchgang 1a, wenn das Probenbehältnis 4 in der Aufnahme 3 aufgenommen ist. Durch die Öffnung 4a und den Durchgang 1a kann Reinigungsfluid in das Probenbehältnis 4 eingebracht werden und insbesondere gleichzeitig wieder austreten, während das Probenbehältnis 4 in der Aufnahme 3 aufgenommen ist.

Vorzugsweise ist die Aufnahme 3 bzw. die Reinigungsvorrichtung mit der erfindungsgemäßen Aufnahme 3 derart angeordnet, dass die Öffnung des Probenbehältnisses 4 zu der Auflage, insbesondere einem Labortisch, zeigt, auf der die Aufnahme angeordnet ist. Das zweite Element ist dann vertikal über dem ersten Element angeordnet.

### Bezugszeichenliste

- 1: erstes Element
- 1a: Durchgang
- 1b: Vertiefung
- 1c: Schiene
- 2: zweites Element
- 3: Aufnahme
- 4: Probenbehältnis
- 4a: Öffnung
- 4b: Boden
- 5: Federeinrichtung
- 5a: Stempel
- 5b: Griff
- 6: Feder
- 7: Verbindungselement
- 8: Verbindungspunkt bzw. Bohrung
- W_{1b}: Weite der Vertiefung in Y-Richtung
- W₁ₐ: Weite des Durchgangs in Y-Richtung
- A, A': Abstand in Längsrichtung
- A₁ₐ: Abstand von benachbarten Durchgängen in X-Richtung
- L: Längsrichtung
- X,Y: Richtungen senkrecht zur Längsrichtung und zueinander

## Patentansprüche

1. Aufnahme (3), insbesondere Reinigungsvorrichtung, zum Aufnehmen von zumindest einem bevorzugt länglichen Probenbehältnis (4), insbesondere Küvette, mit einer Öffnung (4a) und einem der Öffnung in einer Längsrichtung (L) gegenüberliegenden, das Probenbehältnis verschließenden Boden (4b) während der Reinigung des Probenbehältnisses, wobei die Aufnahme aufweist:
ein erstes Element (1) zum zumindest abschnittsweisen Anliegen in der Längsrichtung an einem in die Längsrichtung (L) zeigenden Rand der Öffnung (4a) des Probenbehältnisses, wobei das erste Element (1) einen Durchgang (1a) aufweist, der derart ausgebildet ist, dass er zumindest abschnittsweise mit der Öffnung (4a) des Probenbehältnisses bei Aufnahme des Probenbehältnisses (4) überlappt, und ausgebildet ist, bei Aufnahme des Probenbehältnisses (4) Fluid zum Reinigen des Probenbehältnisses durch die Öffnung ein- und auszuführen, und
ein dem ersten Element (1) in Längsrichtung (L) im Wesentlichen gegenüberliegendes zweites Element (2) zum zumindest abschnittsweisen Anliegen in der Längsrichtung an dem Boden (4b) des Probenbehältnisses,
wobei das erste (1) und zweite (2) Element derart angeordnet sind, dass das Probenbehältnis (4) zwischen dem ersten (1) und zweiten (2) Element gehalten, insbesondere zwischen dem ersten (1) und zweiten (2) Element in der Längsrichtung (L) eingeklemmt, werden kann.

2. Aufnahme nach Anspruch 1, bei der das erste Element (1) an der zum Probenbehältnis (4) hinzeigenden Seite des ersten Elementes (1) am Durchgang (1a) eine Vertiefung (1b) in Längsrichtung (L) mit einer größeren Weite (W_{1b}) als eine Weite (W₁ₐ) des Durchgangs (1a) in einer Richtung (Y) senkrecht zur Längsrichtung (L) aufweist, und das erste Element (1) dabei derart ausgebildet ist, dass zumindest ein Abschnitt an der Öffnung (4a) des Probenbehältnisses im Wesentlichen in der Vertiefung (1b) in Längsrichtung (L) aufgenommen werden kann.

3. Aufnahme nach Anspruch 1 oder 2, bei der der Durchgang (1a) als Aussparung und/oder Bohrung in dem ersten Element (1) ausgebildet ist.

4. Aufnahme nach Anspruch 1 oder 2, bei der das erste Element (1) zumindest zwei im Wesentlichen parallel zueinander und in eine Richtung (Y) senkrecht zur Längsrichtung (L) verlaufende Schienen (1c) aufweist, und der Durchgang (1a) als Zwischenraum zwischen den Schienen (1c) ausgebildet ist.

5. Aufnahme nach einem der vorhergehenden Ansprüche, bei der das erste (1) und/oder zweite (2) Element zumindest eine Federeinrichtung (5) zum Drücken des Probenbehältnisses (4) gegen das andere Element (1, 2) durch eine in der Längsrichtung (L) wirkende Rückstellkraft aufweist, wobei die Federeinrichtung (5) vorzugsweise derart ausgebildet ist, dass durch Vorspannen der Federeinrichtung (5) in der Längsrichtung (L) der Abstand (A) zwischen dem ersten (1) und zweiten (2) Element zum Einsetzen des Probenbehältnisses (4) vergrößert werden kann.

6. Aufnahme nach Anspruch 5, bei der die Federeinrichtung (5) zumindest ein Federelement aufweist, das bei Aufnahme des Probenbehältnisses (4) zu der zu dem Probenbehältnis (4) hin orientierten Seite des ersten bzw. zweiten Elements angeordnet ist, und/oder ein Federelement aufweist, das bei Aufnahme des Probenbehältnisses (4) auf der von dem Probenbehältnis (4) weg orientierten Seite des ersten (1) oder zweiten (2) Elements angeordnet ist.

7. Aufnahme nach Anspruch 5 oder 6, bei der die Federeinrichtung (5) einen in Längsrichtung (L) beweglichen Stempel (5a) zum zumindest abschnittsweisen Anliegen an dem Probenbehältnis (4) aufweist.

8. Aufnahme nach einem der vorhergehenden Ansprüche, die zum gleichzeitigen Aufnehmen mehrerer Probenbehältnisse (4) eingerichtet ist, die entlang einer Richtung (X) senkrecht zur Längsrichtung (L) aneinandergereiht sind.

9. Aufnahme (3) nach einem der vorhergehenden Ansprüche, die derart schwenkbar ist, dass das aufgenommene Probenbehältnis in der Aufnahme geneigt werden kann.

10. Verwendung der Aufnahme (3) nach einem der vorhergehenden Ansprüche zur Reinigung des Probenbehältnisses, wobei Reinigungsfluid durch die Öffnung (4a) und den Durchgang (1a) in das Probenbehältnis (4) ein- und aus dem Probenbehältnis (4) herausgeführt wird.
